# EUROPEAN PATENT SPECIFICATION

(11) **EP 3 437 088 B1**
(45) Date of publication and mention of the grant of the patent: **26.01.2022**
(21) Application number: 16907515.7
(22) Date of filing: 28.06.2016
(51) Int. Cl.: G06F 13/42, G06F 13/00, G09G 5/04, G09G 5/00

(54) **MONITOR WITH PROMPT TO SWITCH ACTIVE STATUS OF USB PORT**
MONITOR MIT AUFFORDERUNG ZUR UMSCHALTUNG DES AKTIVEN STATUS EINES USB-ANSCHLUSSES
MONITEUR AVEC INVITATION À COMMUTER L'ÉTAT ACTIF D'UN PORT USB

(43) Date of publication of application: 06.02.2019
(73) Proprietor: Hewlett-Packard Development Company, L.P., Spring TX 77389 (US)
(72) Inventor: GUYNES, Timothy P., Houston, TX 77070 (US); CHEN, Wen Shih, Taipei 11568 (TW); FREDERICK, John W., Houston, TX 77070 (US)
(74) Representative: HGF
(86) International application number: PCT/US2016/039875
(87) International publication number: WO 2018/004546

(56) References cited:
- US-A1- 2010 060 571
- US-A1- 2010 060 571
- US-A1- 2014 068 119
- US-A1- 2014 068 119
- US-A1- 2016 005 378

## Description

### BACKGROUND

The Universal Serial Bus (USB) protocol is a well-established standard for connecting electronic devices for the transfer of both power and data. USB connections are used, for example, in such diverse applications as printers, computers, monitors and mobile phones.

USB connections have continued to evolve since being introduced with increases in speed and versatility. For example, USB 1.0 was introduced in 1995 and transferred data at a rate of 12 megabits per second. USB 3.0, announced in 2008, now provides a transfer rate up to about 5 gigabits per second. Most recently, in 2014, the specification for USB-C was finalized. USB-C provides data transfer at rates up to about 10 gigabits per second. However, the redesigned USB-C connector cannot be used in previous USB ports without an adaptor.
US 2014/0068119 describes a keyboard-video-mouse system having a virtual port to configure user interfaces of the system and methods of providing and using the same.
US 2016/0005378 relates to provision of a display device and a display method capable of displaying video signals according to a video signal input to a video input terminal.

### BRIEF DESCRIPTION OF THE DRAWINGS

The accompanying drawings illustrate various implementations of the principles described herein and are a part of the specification. The invention is set out in the independent claims. Preferred embodiments are defined by the dependent claims.
Fig. 1 is an illustration of an example monitor consistent with the disclosed implementations.
Fig. 2 is another illustration of another example monitor consistent with the disclosed implementations.
Fig. 3 is a flowchart of an example method of operating a monitor consistent with the disclosed implementations.
Figs. 4A and 4B are example illustrations of prompts for display on a monitor consistent with the disclosed implementations.
Figs. 5 is an illustration of an example monitor and host devices consistent with the disclosed implementations,
Figs. 6A and 6B are example illustrations of prompts for display on a monitor consistent with the disclosed implementations.
Fig. 7A and 7B are example illustrations of a hot-key guide for display on a monitor consistent with the disclosed implementations.
Fig. 8 is another flowchart of an example method of operating a monitor consistent with the disclosed implementations.
Figs. 9A-9D are example illustrations of a menu and hot-key guide for display on a monitor consistent with the disclosed implementations.
Figs. 10A and 10B are example illustrations of prompts for display on a monitor consistent with the disclosed implementations.
Fig. 11 is an illustration of an example monitor with On Screen Display consistent with the disclosed implementations.
Fig. 12 is an illustration of an example port configuration for an example monitor consistent with the disclosed implementations.

Throughout the drawings, identical reference numbers designate similar, but not necessarily identical, elements.

### DETAILED DESCRIPTION

As indicated above, there has been an evolution of USB connectors over time, resulting in a number of different USB protocols being currently in use. A monitor, for example, may have multiple USB ports, including USB ports of different types, so as to be able to accept input from a number of different USB cables.

A monitor is typically used to display a video signal output by a host device, such as a computer, a tablet or a smart phone. Any such host device outputting a video signal to a monitor for display is referred to as a host with respect to that monitor.

The monitor may also accept connections with user input and other devices, such as a keyboard or mouse, via one or more USB ports on the monitor. The monitor then transmits input from those devices upstream to a host. This connection between the monitor and an host may be separate from a video connection between the monitor and host and may also be made through USB ports on both the monitor and the host. The monitor and host may connect in this way using to any one of the various USB protocols available. For example, a host may be connected to the monitor via a USB 3.0 or USB-C connection.

In one example, a monitor, and a keyboard and mouse that are connected to the monitor, may be used with two different computers that are both connected as hosts with the monitor. One of the computers may be connected to the monitor via video and the USB 3.0 upstream ports, while the other computer may be connected to the monitor via video and the USB-C upstream ports. The user can then switch between seeing the video output from and providing user input to one of the hosts to operating with the other of the two hosts.

Current chipsets used in commercial monitors, however, may limit the ability of the monitor to provide upstream data to only one active host at a time. Thus, in the preceding example, if the monitor is active with the host using the USB 3.0 upstream port when the second host is connected via the USB-C upstream port, the logic in the monitor may not be able to communicate with the host on the USB-C upstream port unless the monitor is switched to recognize the USB-C upstream port, and not the USB 3.0 upstream port, as being the active port. The monitor can then communicate through the USB-C upstream port, but will not output data using the USB 3.0 upstream port while the USB-C upstream port has the active status.

This situation may be challenging for a user. For example, if the user wants to connect a second host to a different USB upstream port of the monitor, the user may then wonder why the input to connected user input devices is not reaching that newly-connected host because the user does not know that he or she must first access the controls for the monitor and switch the active status to the USB port connected to the desired host. Additionally, the monitor controls for switching the active status among the different USB ports may be cumbersome to access, particularly for a user who is not technically inclined.

To address these issues, the present specification describes, among other things, a monitor includes: a display device; a first Universal Serial Bus (USB) upstream port; and a second USB upstream port. In response to a new host being connected to one of the USB upstream ports when the other of the USB upstream ports has active status by already supporting an active host, the monitor is to display on the display device a prompt to a user to switch active status to the USB upstream port connected to the new host.

In another example, the present specification describes a monitor that includes: a display device; a first Universal Serial Bus (USB) upstream port, a second USB upstream port; and a processor for outputting an on-screen display (OSD) on the display device. The OSD includes controls for selecting which of the USB upstream ports is given active status; and, in response to a new host being connected to one of the USB upstream ports when the other of the USB upstream ports has active status by already supporting an active host, the OSD to prompt a user for input whether to switch active status to the USB upstream port connected to the new host.

In another example, the present specification describes a method that includes: with a monitor comprising a display device, a first Universal Serial Bus (USB) upstream port and a second USB upstream port, detecting a new host being connected to one of the USB upstream ports when the other of the USB upstream ports has active status by already supporting an active host; and, in response to the new host being connected to one of the USB upstream ports, displaying on the display device a prompt to a user to switch active status to the USB upstream port connected to the new host.

As used herein and in the following claims, the term "active status" identifies that status of the one USB upstream ports, among a number of USB upstream ports available, that is recognized by the monitor as being where upstream signals are output to a host. For example, as described above, the monitor may be a node to which user input devices, such as a keyboard or mouse, are connected via a USB port of the monitor. The monitor may then provide input signals from these input devices upstream to a host computer that is displaying video on the monitor. Upstream signals will not be output on a USB port that does not have active status.

As used herein and in the following claims, the term "active host" refers to a host device, such as a computer, tablet, phone or other computing device, that is connected to a port that has active status and that is accepting upstream signals from the monitor through that active status port.

As used herein and in the following claims, the term "prompt" refers a message or other indicator perceptibly output by an electronic device to notify a human user of some event or development. The prompt may also solicit input from the human user in response to the event or development. In some cases, the prompt may include a user input mechanism for accepting user input in response to the prompt.

As used herein and in the following claims, the term "hot-key" refers to a physical key or button that can be actuated by a user where the function performed in response to actuating the key or button changes in different circumstances or contexts. Typically, an electronic display associated with the hot-key displays some indication, such as an icon, indicating what function is currently available by actuation of the hot-key. In this way, the display can change to indicate the different functions the hot-key may perform as the context changes.

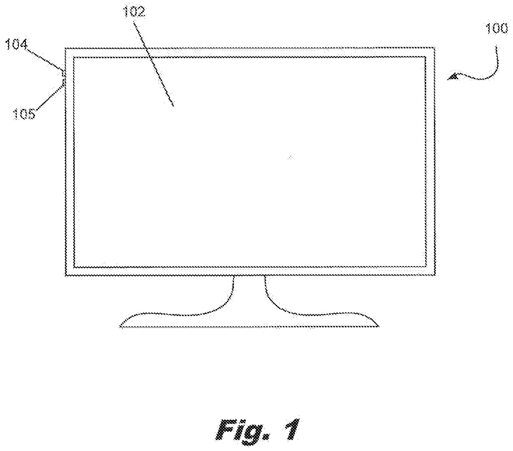

Fig. 1 is an illustration of an example monitor consistent with the disclosed implementations. As shown in Fig. 1, the monitor (100) includes a display device (102); a first Universal Serial Bus (USB) port (104); and a second USB port (105). In response to a new host being connected to one of the USB upstream ports when the other of the USB upstream ports has active status by already supporting an active host, the monitor (100) displays on the display device (102) a prompt to a user to switch active status to the USB upstream port connected to the new host.

The display device (102) may be any device to receive an input video signal and visually display that video signal for a user. For example, the display device may be a liquid crystal display, plasma display or other display device. The monitor may also include a speaker or speakers for output an audio portion of the input video signal.

The illustrated monitor (100) includes two different USB ports (104, 105). For example, the first USB upstream port (104) may be a USB 3.0 port, while the second USB upstream port (105) may be a USB-C port. However, the monitor (100) may include any number or configuration of USB ports of the same or different types.

As indicated above, to simplify the user experience in operating the various USB ports available, the monitor (100), in response to a host device being connected to one of the USB upstream ports (104, 105) when the other of the USB ports has active status by already supporting an active host device, displays a prompt to a user on the display device (102) to switch active status to the USB port connected to the new host device.

Presumably, if the user connects a second host to the monitor (100), the user wishes to use the monitor and any attached peripherals with that second host. Consequently, the automated prompt that occurs upon detection of the new connection informs or reminds the user that further action is needed to give the new host active status. This consequently avoids the situation in which the user connects the new host but does not know or understand that further action is needed to switch the active status within the monitor to the USB port to which the new host is connected. Further details of the prompt and how it assists the user will be described below.

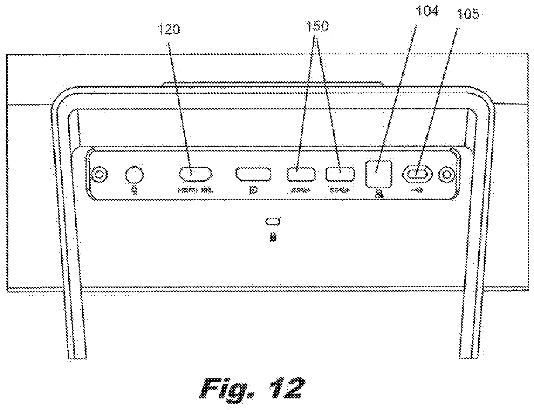

Fig. 12 is an illustration of an example port configuration for an example monitor consistent with the disclosed implementations. As shown in Fig. 12, the various ports may be located on the back of the monitor opposite the display surface. These ports may include one or more High-Definition Multimedia Interface (HDMI) ports (120) with which the monitor receives an audiovisual input signal from a host.

Two or more type-A USB ports (150) may be provided for connecting the monitor to a peripheral such as a keyboard and mouse. A USB 3.0 upstream port (104) and a USB-C upstream port (105) are also included and may be used to connect the monitor to a host or other device.

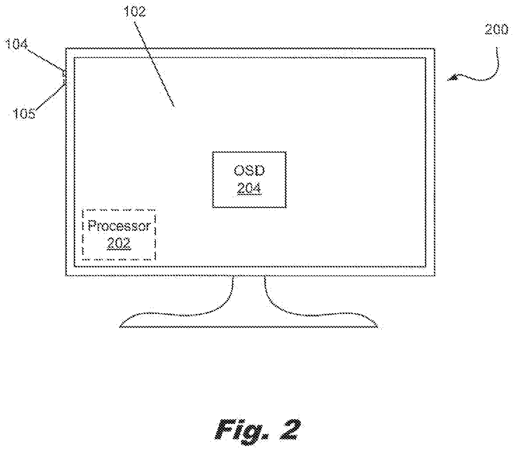

Fig. 2 is another illustration of another example monitor consistent with the disclosed implementations. As shown in Fig. 2, another example monitor (200) includes a display device (102); a first Universal Serial Bus (USB) port (104); a second USB port (105); and a processor (202) for outputting an on-screen display (OSD) (204) on the display device (102). The OSD (204) includes controls for selecting which of the USB ports (104, 105) is given active status. Consequently, in response to a new host being connected to one of the USB upstream ports when the other of the USB ports has active status by already supporting an active host, the OSD (204) prompts a user for input whether to switch active status to the USB port connected to the new host.

Thus, in addition to merely notifying a user that additional action is needed when connecting a new host, the OSD (204) of Fig. 2 may assist the user in actually switching active status to the USB port where the new host has been connected. This may be accomplished in several different ways, as described further below. For example, if the monitor (200) is touch sensitive, the OSD (204) may include a displayed button or control for switching the active status among the different USB ports. Alternatively, the OSD (204) may be displayed in connection with a number of hot-keys that can be actuated for switching the active status among the different USB ports.

The processor (202) represents the logic in the monitor (200) for providing this functionality. Thus, the processor (202) may be. for example, a processor, controller, Application Specific Integrated Circuit (ASIC) or other logic. The processor (202) will detect connections at the various USB upstream ports (104, 105) and control the OSD (204) on the display device (102) accordingly, as described herein.

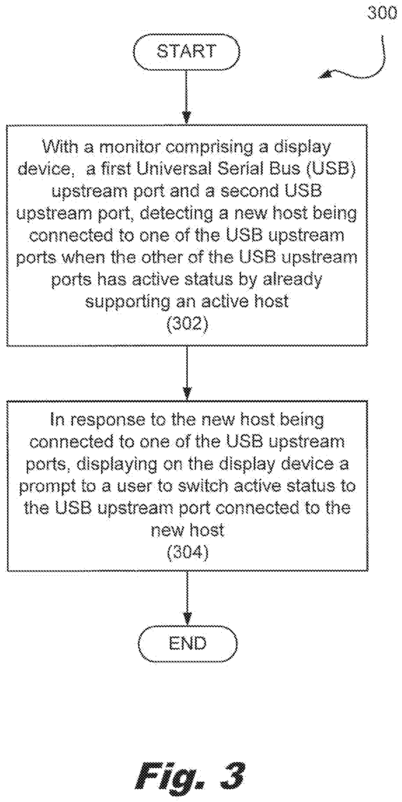

Fig. 3 is a flowchart of an example method (300) of operating a monitor consistent with the disclosed implementations. As shown in Fig. 3, the illustrated method includes: with a monitor comprising a display device, a first Universal Serial Bus (USB) upstream port and a second USB upstream port, detecting (302) a new host being connected to one of the USB upstream ports when the other of the USB upstream ports has active status by already supporting an active host; and, in response to the new host being connected to one of the USB upstream ports, displaying (304) on the display device a prompt to a user to switch active status to the USB upstream port connected to the new host.

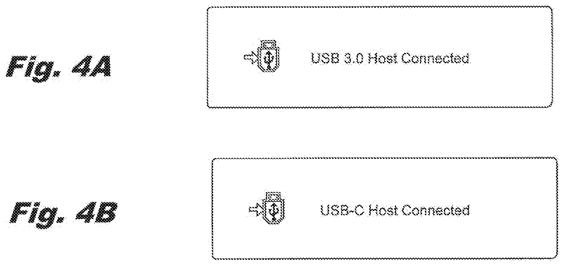

Figs. 4A and 4B are example illustrations of prompts for display on a monitor consistent with the disclosed implementations. As indicated above, a prompt may simply helpfully notify the user of a new connection being made so that the user is reminded to take additional action as needed to use the new connection. In such examples, the prompt may simply state that a USB 3.0 host has been connected. (Fig. 4A) Alternatively, the prompt may state that a USB-C host has been connected. (Fig 4B). This information may help the user identify which upstream port should be given active status when the new connection is made. Based on the prompt appearing, the user can then select the USB 3.0 port or the USB-C port as the active port based on where the latest connection was identified.

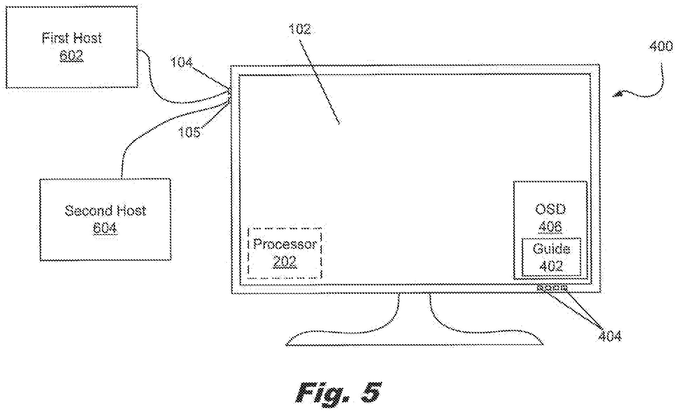

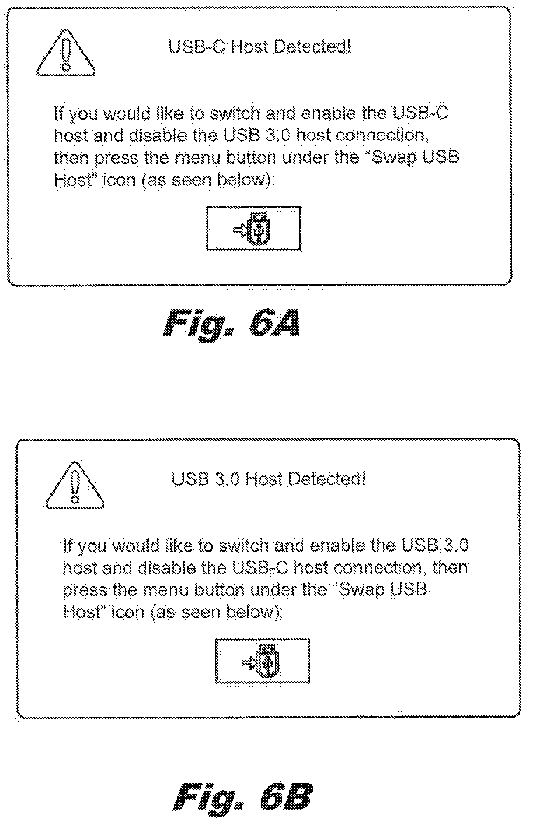

Fig. 5 is an illustration of an example monitor and host devices consistent with the disclosed implementations. As shown in Fig. 6, the monitor (600) includes a display device (102) and multiple USB upstream ports (104, 105). The monitor (400) also includes a processor (202) to detect activity at the upstream ports (104, 105) and drive an OSD (406).

As also shown in Fig. 5, a first host (602) may be connected to a first USB upstream port (104), and a second upstream host (504) may be connected to a second USB upstream port (105). One of the hosts may have been connected first and received active status when the other host was connected later and is not active until the active status is switched to its USB upstream port.

As also shown in Fig. 5, the prompts described herein may be included in the OSD (406) and included with a hot-key guide (402). This guide (402) appears directly above and in association with a number of hot-keys (404) on the monitor (400). As described above, the hot-keys (404) are physical buttons or keys on the monitor (400) but may have different functions depending on the context. As described further below, the guide (402) may point the user to one of the hot-keys (404) that can be actuated to switch the active status of the USB ports to the port that has just reported a new connection

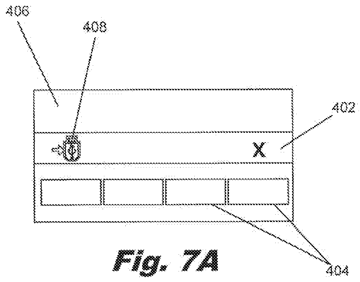

Figs. 6A and 6B are example illustrations of prompts for display on a monitor consistent with the disclosed implementations. Fig. 6A illustrates a prompt that notifies the user that a USB-C host has been connected and detected by the monitor and that, to work with that host, active status should be switched from the USB 3.0 port, which is currently active, to the USB-C port. As will be described in further detail below, the prompt shown in Fig. 6A may be displayed with a hot-key guide shown in Fig. 7A that helps the user make this switch of active status to the USB-C port.

Fig. 6B illustrates the complementary example in which a USB 3.0 host is connected and detected when a USB-C host has, to that point, been active and the USB-C upstream port has had active status. Again, the prompt shown in Fig. 6B may be displayed with the hot-key guide of Fig. 7A that helps the user make this switch of active status to the USB 3.0 port.

Fig. 7A is an example illustrations of a hot-key guide for display on a monitor with the prompts of Fig. 6A or 6B. As shown in Fig. 7A, the OSD (406) includes a hot-key guide (402) that is displayed above and in association with the hot-keys (404) of the monitor. The hot-key guide (402) may include a number of icons (408) that indicate the current functionality of each corresponding hot-key (404). In particular, one icon (408) indicates that the corresponding hot-key will switch the active status to the USB port most recently reporting a connected host.

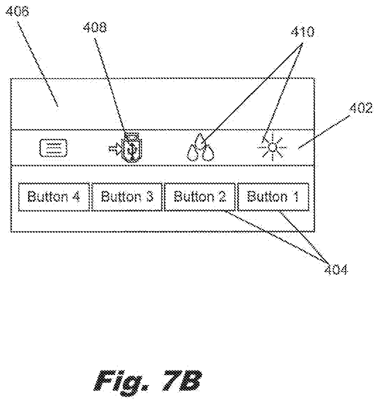

Fig. 7B is another an example illustrations of a hot-key guide for display on a monitor consistent with the disclosed implementations. As shown in Fig. 7B, the OSD (406) includes a hot-key guide (402) that is displayed above and in association with the hot-keys (404) of the monitor. The hot-key guide (402) may include a number of icons (410) that indicate the current functionality of each corresponding hot-key (404).

As above, one icon (408) indicates that the corresponding hot-key (Button 3) will switch the active status to the USB port most recently reporting a connected host. Alternatively, this hot-key (Button 3) may act as a USB swap button and simply switch active status to the other of two USB ports available or toggle the active status through a pre-determined sequence of more than two USB ports available.

This icon (408) is included in and referred to by the example prompts of Figs, 6A and 6B. Thus, the prompt of either Fig 6A or 6B may be displayed in the OSD (406) of Figs. 7A and 7B with the guide (402) to assist the user in switching active status to the USB port for the newly-connected host that the user wishes to use.

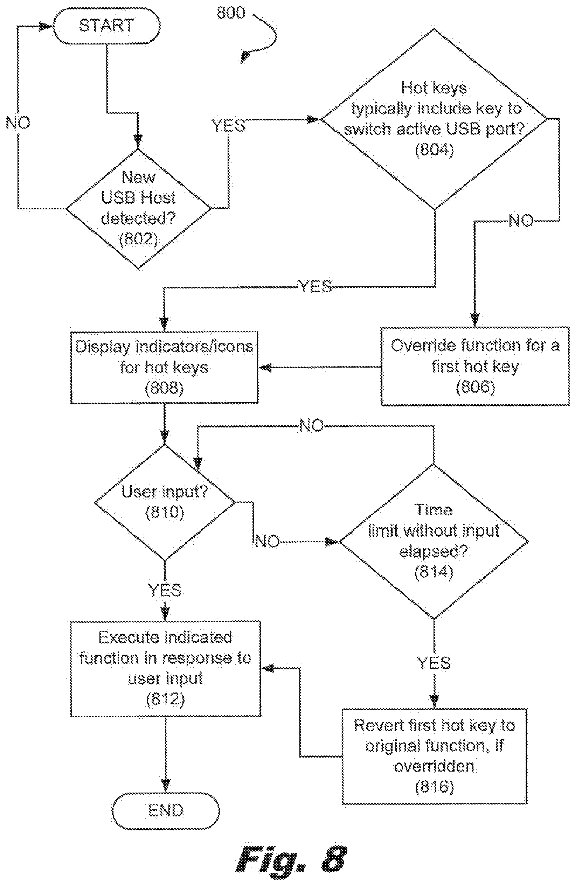

Fig. 8 is another flowchart of an example method of operating a monitor consistent with the disclosed implementations. As shown in Fig. 8, the method (800) begins when a new host connected to a USB upstream port is detected (802). If no new host is detected, the method waits for such a connection.

When a new host is connected (802), a determination (804) is made whether the hot-keys will include a key to switch the active status among the USB ports. This demonstrates the versatility of hot-keys. In some instances, the user may assigned the most frequently used functions to the monitor hot-keys. Thus, the functions provided in a given context may vary based on user control from monitor to monitor.

In the context of a new host being connected to a USB port, the function of selectively switching active status to that port will likely be desired. If the hot-keys are configured to include this function (804: yes), the method can proceed to display (808) the guide for the hot-keys. If, however, the hot-keys are not then set to include a key for switching USB port active status (804: no), the method overrides (806) the function assigned to one of the hot keys to reassign that key for switching USB port active status, as most likely wanted in the context. A hot-key guide indicating the hot-key assigned to switch USB port active status is then displayed (808).

The monitor then waits for user input, for example, using the hot-keys. (810). When user input is received (810: yes), the method executes the function indicated by the user input (812).

If user input is not received (810: no), the method checks (814) a time limit to see if the time limit has elapsed. In one example, this time limit may be 3 to 10 seconds. If user input has not been received when the time limit elapses, it may be presumed that the user does not want to switch the active status of the USB ports and may, instead, want the original functionality of the hot-keys.

Accordingly, after elapse of the time limit with no input received (814: yes), the method reverts (816) the hot-key whose function was overridden back to its previous assigned function. Any subsequent user input received is the executed (812).

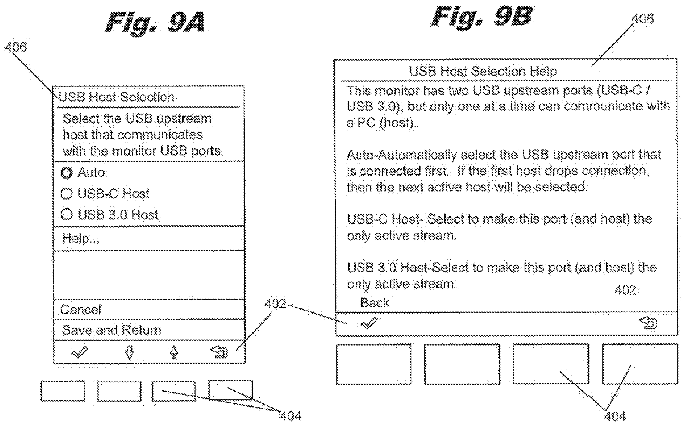

Figs. 9A and 9B are example illustrations of a menu and hot-key guide for display on a monitor consistent with the disclosed implementations. As shown in Fig. 9A, the OSD (406) described herein may include a menu offering options for controlling the active status among the USB ports.

In the illustrated example, the menu includes three options. The first is an "Auto" option. Under this option, the first port to receive connection with an active host will receive active status. That port will retain active status until that host is disconnected or no longer active. At that point, the next port to receive connection with an active host will retain or take the active status for so long as that host is connected and active.

The second option switches the active status to the USB-C upstream port for a "USB-C Host." Active status then stays with the USB-C upstream port until further user input switches this selection. Similarly, the third option switches the active status to the USB 3.0 upstream port for a "USB 3.0 Host." Active status then stays with the USB 3.0 upstream port until further user input switches this selection.

A "Help" option in the menu accesses an explanatory help prompt. An example of such a help prompt is illustrated in Fig. 9B.

As shown in Figs. 9A and 98, both of these OSD prompts include a guide (402) for the hot-keys (404) of the monitor and are displayed in association with those keys, as shown in other figures. Consequently, the hot-keys are, in this context, repurposed to provide for navigation in the displayed menu (406) and selection of menu options.

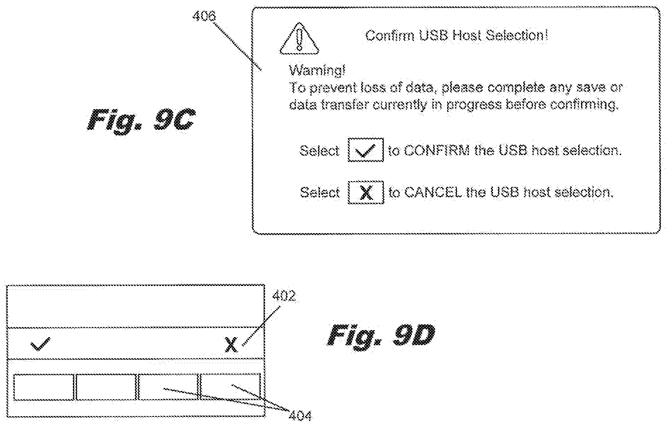

Fig. 9C illustrated an example OSD following selection of a new host using the menu of Fig. 9A. This OSD prompts the user to confirm the selection of a new host, meaning that active status will be switched to the USB port supporting that newly-selected host. A corresponding guide, shown in Fig. 9D, with icons (402), is displayed over the hot-keys (404) to allow the user to operate the hot-keys to confirm or cancel the new host selection. This confirmation prompt and the corresponding hot-key guide may be used in any of the examples in the specification or anytime the active status is being switched to a new port to ensure that the user wants the switch to take place.

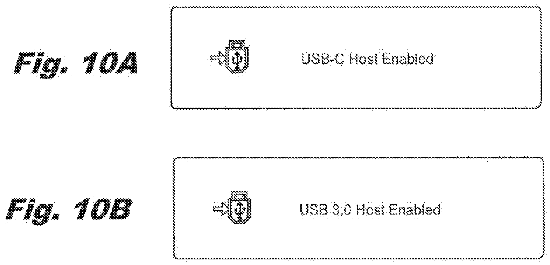

Figs. 10A and 10B are example illustrations of prompts for display on a monitor consistent with the disclosed implementations. Once the active status has been switched to one of the USB ports, a prompt such as those shown in Figs. 10A and 10B may be displayed to confirm to the user which port has active status and, consequently, what host will be selected and usable.

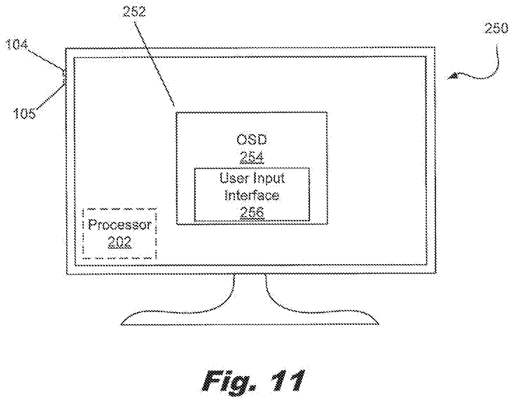

Figs. 11 is an illustration of an example monitor with On Screen Display consistent with the disclosed implementations. As shown in Fig. 11, the monitor (250) may include a touch-sensitive display (252). With this type of display, the user can touch the display with the location of the display being detected so as to indicate selection of an option displayed at that location on the monitor (250).

In such an example, the OSD (254) may include any of the prompts described above reminding or advising the user of the need to switch active status at the USB ports to accommodate a newly connected host. The OSD (254) also includes a user input interface (256) that will include controls a user can touch to control which USB port has active status. For example, a menu similar to that of Fig. 9A could be displayed with the user simply touching the option desired.

In this way, the user experience is facilitated by the user connecting a new host and receiving the on-screen prompt to activate the corresponding USB port for that host. The user can the simply touch the corresponding option in the displayed prompt to active the USB port for the desired host.

While many of the examples descried above reference a USB 3.0 upstream port and a USB-C upstream port as competing upstream ports, any number of USB ports of any type configuration can be provided and operated using the principles described herein.

## Claims

1. A monitor (100) comprising:
a display device (102);
a first Universal Serial Bus, USB, upstream port (104); and
a second USB upstream port (105); **characterized in that** in response to a new host (604) being connected to one of the USB upstream ports when the other of the USB upstream ports has active status by already supporting an active host (602), the monitor (100) displaying on the display device (102) a prompt to a user to switch active status to the USB upstream port (105) connected to the new host (604).

2. The monitor (100) of claim 1, wherein the first USB upstream port (104) is a USB 3.0 upstream port and the second USB upstream (105) port is a USB-C upstream port.

3. The monitor (100) of claim 1, wherein the prompt comprises an On-Screen Display (406), OSD, indicating a new host (604) has been detected.

4. The monitor (100) of claim 1, wherein the prompt comprises an On-Screen Display (406), OSD, indicating functionality of a number of hot-keys, one of the hot-keys having a function to switch active status from a currently active one of the USB ports (104) to the other of the USB ports (105).

5. The monitor (100) of claim 4, wherein, if the hot-keys do not normally include a key for switching active status among the USB ports, the monitor (100) over-rides an established function of a first of the hot-keys, making a function of the first hot-key to switch active status among the USB ports.

6. The monitor (100) of claim 5, wherein the established function of the first hot-key is over-ridden for a set amount of time after which, if the first hot-key has not been actuated, the first hot-key is returned to its established function.

7. The monitor (100) of claim 5, wherein the monitor (100) changes an icon in the OSD (406) for the first hot-key when over-riding the established function of the first hot-key.

8. The monitor (100) of claim 1, wherein the display device (102) is a touch-sensitive display, and the prompt comprises a button displayed on the touch-sensitive display to switch active status to the USB port connected to the new host.

9. The monitor (100) of claim 1, wherein the prompt comprises a menu in an On-Screen Display (406), OSD, the menu including an option to select either of the USB ports as having active status.

10. The monitor (100) of claim 9, wherein the menu comprises an automated option under which active status is given to a first of the USB ports to receive a connection to an active host.

11. The monitor (100) of claim 1 further comprising:
a processor (202) for outputting an on-screen display (204), OSD, on the display device (102);
wherein, the OSD (204) comprises controls for selecting which of the USB upstream ports is given active status; and,
in response to a new host (604) being connected to one of the USB upstream ports (105) when the other of the USB upstream ports (104) has active status by already supporting an active host (602), the OSD (206) to prompt a user for input whether to switch active status to the USB upstream port connected to the new host (604).

12. A method (300) comprising:
with a monitor (100) comprising a display device (102), a first Universal Serial Bus, USB, upstream port (104) and a second USB upstream port (105),
the method further **characterized by** detecting (302) a new host (604) being connected to one of the USB upstream ports (105) when the other of the USB upstream ports (104) has active status by already supporting an active host (602); and,
in response to the new host (604) being connected to one of the USB upstream ports, displaying (304) on the display device (102) a prompt to a user to switch active status to the USB upstream port connected to the new host.

13. The method (300) of claim 12, wherein the prompt comprises an On-Screen Display (206), OSD, indicating a new host (604) has been detected.

14. The method (300) of claim 12, wherein the prompt comprises an On-Screen Display, (OSD) indicating functionality of a number of hot-keys, one of the hot-keys having a function to switch active status from a currently active one of the USB ports to the other of the USB ports.

15. The method of claim 12, wherein the prompt comprises a menu in an On-Screen Display (OSD), the menu comprising options to select either of the USB ports as having active status and an option to select an automatic functionality under which active status is given to a first of the USB ports to receive a connection to an active host and is retained by that USB port as long as that host is active.

## Patentansprüche

1. Monitor (100), der Folgendes umfasst:
eine Anzeigevorrichtung (102);
einen ersten Universal-Serial-Bus(USB)-Upstream-Port (104); und
einen zweiten USB-Upstream-Port (105);
**dadurch gekennzeichnet, dass** als Reaktion darauf, dass ein neuer Host (604) mit einem der USB-Upstream-Ports verbunden wird, wenn der andere der USB-Upstream-Ports durch bereits Unterstützen eines aktiven Hosts (602) einen aktiven Status aufweist, der Monitor (100) auf der Anzeigevorrichtung (102) eine Aufforderung an einen Benutzer anzeigt, um den aktiven Status zu dem USB-Upstream-Port (105) zu schalten, der mit dem neuen Host (604) verbunden ist.

2. Monitor (100) nach Anspruch 1, wobei der erste USB-Upstream-Port (104) ein USB-3.0-Upstream-Port ist und der zweite USB-Upstream-Port (105) ein USB-C-Upstream-Port ist.

3. Monitor (100) nach Anspruch 1, wobei die Aufforderung eine Bildschirmanzeige (406) (On-Screen Display - OSD), umfasst, die angibt, dass ein neuer Host (604) erfasst worden ist.

4. Monitor (100) nach Anspruch 1, wobei die Aufforderung eine Bildschirnanzeige (406) (OSD) umfasst, die eine Funktionalität einer Anzahl von Hot-Keys angibt, wobei einer der Hot-Keys eine Funktion aufweist, um den aktiven Status von einem aktuell aktiven der USB-Ports (104) zu dem anderen der USB-Ports (105) zu schalten.

5. Monitor (100) nach Anspruch 4, wobei, falls die Hot-Keys normalerweise keinen Key zum Schalten des aktiven Status zwischen den USB-Ports beinhalten, der Monitor (100) eine eingerichtete Funktion eines ersten der Hot-Keys überschreibt, wobei eine Funktion des ersten Hot-Keys veranlasst wird, den aktiven Status zwischen den USB-Ports zu schalten.

6. Monitor (100) nach Anspruch 5, wobei die eingerichtete Funktion des ersten Hot-Keys eine eingestellte Zeitdauer lang überschrieben wird, nach der, falls der erste Hot-Key nicht betätigt worden ist, der erste Hot-Key zu seiner eingerichteten Funktion zurückgegeben wird.

7. Monitor (100) nach Anspruch 5, wobei der Monitor (100) ein Symbol in der OSD (406) für den ersten Hot-Key ändert, wenn die eingerichtete Funktion des ersten Hotkeys überschrieben wird.

8. Monitor (100) nach Anspruch 1, wobei die Anzeigevorrichtung (102) eine berührungsempfindliche Anzeige ist und die Aufforderung eine Schaltfläche umfasst, die auf der berührungsempfindlichen Anzeige angezeigt wird, um den aktiven Status zu dem USB-Port zu schalten, der mit dem neuen Host verbunden ist.

9. Monitor (100) nach Anspruch 1, wobei die Aufforderung ein Menü in einer Bildschirmanzeige (406) (OSD) umfasst, wobei das Menü eine Option beinhaltet, um einen der USB-Ports auszuwählen, um einen aktiven Status aufzuweisen.

10. Monitor (100) nach Anspruch 9, wobei das Menü eine automatisierte Option umfasst, gemäß der einem ersten der USB-Ports ein aktiver Status gegeben wird, um eine Verbindung mit einem aktiven Host zu empfangen.

11. Monitor (100) nach Anspruch 1, der ferner Folgendes umfasst:
einen Prozessor (202) zum Ausgeben einer Bildschirmanzeige (204) (OSD) auf der Anzeigevorrichtung (102);
wobei die OSD (204) Steuerungen zum Auswählen umfasst, welchem der USB-Upstream-Ports der aktive Status gegeben wird; und
als Reaktion darauf, dass ein neuer Host (604) mit einem der USB-Upstream-Ports (105) verbunden wird, wenn der andere der USB-Upstream-Ports (104) durch bereits Unterstützen eines aktiven Hosts (602) einen aktiven Status aufweist, die OSD (206) einen Benutzer zu einer Eingabe auffordert, ob der aktive Status zu dem USB-Upstream-Port geschaltet werden soll, der mit dem neuen Host verbunden ist (604).

12. Verfahren (300), das Folgendes umfasst:
mit einem Monitor (100), der eine Anzeigevorrichtung (102), einen ersten Universal-Serial-Bus(USB)-Upstream-Port (104) und einen zweiten USB-Upstream-Port (105) umfasst, wobei das Verfahren ferner durch das Erfassen (302) eines neuen Hosts (604) gekennzeichnet ist, der mit einem der USB-Upstream-Ports (105) verbunden wird, wenn der andere der USB-Upstream-Ports (104) durch bereits Unterstützen eines aktiven Hosts (602) einen aktiven Status aufweist; und
als Reaktion darauf, dass der neue Host (604) mit einem der USB-Upstream-Ports verbunden ist, Anzeigen (304) einer Aufforderung an einen Benutzer auf der Anzeigevorrichtung (102), um den aktiven Status zu dem USB-Upstream-Port zu schalten, der mit dem neuen Host verbunden ist.

13. Verfahren (300) nach Anspruch 12, wobei die Aufforderung eine Bildschirmanzeige (206) (OSD) umfasst, die angibt, dass ein neuer Host (604) erfasst worden ist.

14. Verfahren (300) nach Anspruch 12, wobei die Aufforderung eine Bildschirmanzeige (OSD) umfasst, die die Funktionalität einer Anzahl von Hot-Keys angibt, wobei einer der Hot-Keys eine Funktion aufweist, um den aktiven Status von einem aktuell aktiven der USB-Ports zu dem anderen der USB-Ports zu schalten.

15. Verfahren nach Anspruch 12, wobei die Aufforderung ein Menü in einer Bildschirmanzeige (OSD) umfasst, wobei das Menü Optionen, um einen der USB-Ports auszuwählen, um einen aktiven Status aufzuweisen, und eine Option umfasst, um eine automatische Funktionalität auszuwählen, gemäß der einem ersten der USB-Ports ein aktiver Status gegeben wird, um eine Verbindung mit einem aktiven Host zu empfangen, und durch diesen USB-Port beibehalten wird, solange dieser Host aktiv ist.

## Revendications

1. Moniteur (100) comprenant :
un dispositif d'affichage (102) ;
un premier port de bus série universel, USB, en amont (104) ; et
un second port USB en amont (105) ;
**caractérisé en ce qu'**en réponse à la connexion d'un nouvel hôte (604) à l'un des ports USB en amont lorsque l'autre des ports USB en amont présente l'état actif en prenant déjà en charge un hôte actif (602), le moniteur (100) affichant sur le dispositif d'affichage (102) une invite à un utilisateur de commuter l'état actif vers le port USB en amont (105) connecté au nouvel hôte (604).

2. Moniteur (100) selon la revendication 1, dans lequel le premier port USB en amont (104) est un port USB 3.0 en amont et le second port USB en amont (105) est un port USB-C en amont.

3. Moniteur (100) selon la revendication 1, dans lequel l'invite comprend un affichage à l'écran (406), OSD, indiquant qu'un nouvel hôte (604) a été détecté.

4. Moniteur (100) selon la revendication 1, dans lequel l'invite comprend un affichage à l'écran (406), OSD, indiquant la fonctionnalité d'un nombre de touches de raccourci, l'une des touches de raccourci ayant une fonction pour commuter un état actif d'un des ports USB (104) actuellement actif vers l'autre des ports USB (105).

5. Moniteur (100) selon la revendication 4, dans lequel, si les touches de raccourci ne comportent normalement pas de touche pour commuter l'état actif parmi les ports USB, le moniteur (100) interrompt une fonction établie d'une première des touches de raccourci, faisant de la première touche de raccourci une fonction pour commuter l'état actif entre les ports USB.

6. Moniteur (100) selon la revendication 5, dans lequel la fonction établie de la première touche de raccourci est interrompue pendant une durée définie, après quoi, si la première touche de raccourci n'a pas été actionnée, la première touche de raccourci est renvoyée à sa fonction établie.

7. Moniteur (100) selon la revendication 5, dans lequel le moniteur (100) modifie une icône dans l'OSD (406) pour la première touche de raccourci lors de l'interruption de la fonction établie de la première touche de raccourci.

8. Moniteur (100) selon la revendication 1, dans lequel le dispositif d'affichage (102) est un écran tactile, et l'invite comprend un bouton affiché sur l'écran tactile pour commuter l'état actif vers le port USB connecté au nouvel hôte.

9. Moniteur (100) selon la revendication 1, dans lequel l'invite comprend un menu dans un affichage à l'écran (406), OSD, le menu comportant une option pour sélectionner l'un ou l'autre des ports USB comme ayant un état actif.

10. Moniteur (100) selon la revendication 9, dans lequel le menu comprend une option automatisée sous laquelle un statut actif est donné à un premier des ports USB pour recevoir une connexion à un hôte actif.

11. Moniteur (100) selon la revendication 1, comprenant en outre :
un processeur (202) pour produire un affichage à l'écran (204), OSD, sur le dispositif d'affichage (102) ;
l'OSD (204) comprenant des commandes pour sélectionner lequel des ports USB en amont reçoit un état actif ; et,
en réponse à la connexion d'un nouvel hôte (604) à l'un des ports USB en amont (105) lorsque l'autre des ports USB en amont (104) a un statut actif en prenant déjà en charge un hôte actif (602), l'OSD (206) pour inviter un utilisateur à indiquer s'il faut commuter l'état actif vers le port USB en amont connecté au nouvel hôte (604).

12. Procédé (300) comprenant :
avec un moniteur (100) comprenant un dispositif d'affichage (102), un premier port USB en amont (104) et un second port USB en amont (105), le procédé étant en outre **caractérisé par** la détection (302) d'un nouvel hôte (604) étant connecté à l'un des ports USB en amont (105) lorsque l'autre des ports USB en amont (104) a un état actif en prenant déjà en charge un hôte actif (602) ; et,
en réponse à la connexion du nouvel hôte (604) à l'un des ports USB en amont, l'affichage (304) sur le dispositif d'affichage (102) d'une invite à un utilisateur de commuter l'état actif vers le port USB en amont connecté au nouvel hôte.

13. Procédé (300) selon la revendication 12, dans lequel l'invite comprend un affichage à l'écran (206), OSD, indiquant qu'un nouvel hôte (604) a été détecté.

14. Procédé (300) selon la revendication 12, dans lequel l'invite comprend un affichage à l'écran (OSD) indiquant la fonctionnalité d'un certain nombre de touches de raccourci, l'une des touches de raccourci ayant une fonction pour commuter l'état actif d'un état actuellement actif des ports USB à l'autre des ports USB.

15. Procédé selon la revendication 12, dans lequel l'invite comprend un menu dans un affichage à l'écran (OSD), le menu comprenant des options pour sélectionner l'un des ports USB comme ayant un état actif et une option pour sélectionner une fonctionnalité automatique sous laquelle l'état actif est donné à un premier des ports USB pour recevoir une connexion à un hôte actif et est conservé par ce port USB tant que cet hôte est actif.
